# EUROPEAN PATENT SPECIFICATION

(11) **EP 2 861 904 B1**
(45) Date of publication and mention of the grant of the patent: **30.05.2018**
(21) Application number: 13736936.9
(22) Date of filing: 07.06.2013
(51) Int. Cl.: F16L 41/08, F16L 41/12

(54) **IMPROVED PLUMBING APPARATUS**
VERBESSERTE INSTALLATIONSVORRICHTUNG
APPAREIL DE PLOMBERIE AMÉLIORÉ

(30) Priority: 14.06.2012 GB 201210622
(43) Date of publication of application: 22.04.2015
(73) Proprietor: McALPINE & COMPANY LIMITED, Hillington Glasgow G52 4LF Scotland (GB)
(72) Inventor: MCALPINE, James Edward, Glasgow G52 4LF (GB)
(74) Representative: Creation IP Ltd
(86) International application number: PCT/GB2013/000255
(87) International publication number: WO 2013/186512

(56) References cited:
- WO-A1-2008/108535
- DE-U1- 20 106 522
- GB-A- 2 481 381
- US-A- 1 908 821
- US-A- 3 891 247

## Description

### Field of the Invention

The present invention relates to an improved apparatus for permitting the addition of a branch pipe to an existing pipe.

### Background to the Invention

During the lifetime of a building it is often desirable to install a new plumbed-in feature, such as a sink, a toilet, a washing machine or the like. The addition of the new feature often requires breaking into existing pipework to install a branch. Conventional methods of adding a branch to an existing pipe involve inserting blockages into the pipe and removing a section of the pipe to be replaced with a junction piece. This method of installing a branch is both time-consuming and prone to leakage. Particularly, when leakage occurs, the leakage will seep through a joint and out into the environment.

Furthermore, the solutions on the market, involve being able to access the entire surface of the pipe into which the branch is to be inserted. If the pipe is buried in the ground or located in a wall or floor recess, this requirement can cause significant problems resulting, on occasions, in entire lengths of pipe having to be replaced with a branch already included.

US Patent US 1 908 821 relates to a metal branch fitting, which consists of a metal saddle portion which snugly fits around part of the external circumference of a main pipe. The saddle is sized to envelop greater than half of the circumference to embrace the outer wall of the pipe to which the saddle is being attached. The saddle is soldered, welded or brazed to the outer pipe wall.

### Summary of the Invention

According to a first aspect of the present invention, there is provided an apparatus for attaching a branch pipe to an existing pipe, the apparatus comprising:
a pipe engagement portion adapted to engage the surface of an existing pipe;
a branch engagement portion adapted to receive an end of a branch pipe to be connected to the existing pipe, the branch engagement portion defining a branch engagement portion wall; a passageway providing fluid communication between the pipe engagement portion and the branch engagement portion, the passageway being defined by a passageway wall and the passageway being of a smaller diameter than the branch engagement portion;
wherein the branch engagement portion defines a transition section providing a continuous surface from the branch engagement portion wall to the passageway wall;
a first attachment mechanism for attaching the apparatus to an existing pipe;
wherein, the first attachment mechanism is provided adjacent the passageway; and
a second attachment mechanism for attaching the apparatus to said existing pipe;
characterised in that the second attachment mechanism is applied through the branch engagement portion transition section.

In at least one embodiment of the present invention, providing an apparatus in which the attachment mechanism is provided adjacent the passageway permits the apparatus to be attached to an existing pipe which is only partially exposed. This is of use, for example, where the pipe is buried or where the pipe is located underneath the floor. Such an arrangement ensures the branch can be added with minimal damage to the surrounding environment, for example without the need to lift large numbers of floorboards or dig a large hole to provide access to all sides of the pipe.

To fit the apparatus, a hole is cut in the existing pipe and the apparatus engages with the surface of the existing pipe around the hole, the passageway providing fluid communication through the existing pipe hole to a branch pipe attached to the apparatus.

The passageway may be defined by a wall having a perimeter and the pipe engagement portion may extend around the circumference of perimeter of the passageway wall. The passageway wall may extend through the pipe engagement portion. In such an arrangement, when fitted to an existing pipe, the passageway wall will extend into the existing pipe through the hole cut in the existing pipe.

In an embodiment, the pipe engagement portion defines a curved engagement surface for engaging the surface of an existing pipe where in use, the curve of the engagement surface may be the same radius as the radius of the external surface of the existing pipe. A curved engagement surface permits a snug fit between the apparatus and the existing pipe.

In an alternative embodiment, the pipe engagement portion is resilient. In this embodiment, the pipe engagement portion may define a curved engagement surface for engaging the surface of the existing pipe. In this embodiment, the engagement surface may have a radius less than the radius of the external surface of the existing pipe. In this embodiment, the resilient nature of the pipe engagement portion and the pipe engagement portion having a radius less than the radius of the external surface of the existing pipe, permits pipe engagement portion to snap fit around the existing pipe. This arrangement also permits a single apparatus to fit a number of different radii.

The first attachment mechanism and the pipe engagement portion may be the same. In an embodiment where the pipe engagement portion snap fits around the existing pipe, this may be sufficient to provide a robust and leak free engagement between the apparatus and the existing pipe.

The pipe engagement portion engaging surface may be adapted to seal against the existing pipe surface. The pipe engagement portion may include a gasket, seal or similar mechanism or a sealing material to provide a seal between the apparatus on the existing pipe surface.

Alternatively or additionally, the pipe engagement portion engaging surface may be adapted to be adhered to the existing pipe surface. For example, the apparatus may be glued to the existing pipe surface. In an embodiment, where there is adherence between the existing pipe surface and the apparatus, the adherence is sufficient to provide a seal between the two components. The apparatus may be provided with an adhering layer applied to the pipe engagement portion engagement surface.

The extended passageway wall may further comprise a seal for sealing against a hole cut in the existing pipe to receive the passageway wall. Alternatively or additionally the seal may be adapted to seal against an internal surface of the existing pipe. The apparatus may be arranged such that the seal can be sealed against the internal surface of the existing pipe by application of an energising force applied from the external side of the existing pipe. Particularly the energising force may be applied through the passageway. In this embodiment, a seal can be made between the apparatus and either the edges of the existing pipe hole or the internal surface of the existing pipe by applying a pull, push or twisting force (or a combination of these) from the outside of the existing pipe through the passageway. This allows the seal between the apparatus and the existing pipe to be made securely and easily.

The branch engagement portion may define a wall. In use, a branch pipe may be received within the branch engagement portion wall. In alternative embodiments, in use, the branch engagement portion wall may be received within a branch pipe.

The passageway may be of a smaller diameter than the branch engagement portion. The branch engagement portion may define a transition section providing a continuous surface from the branch engagement portion wall to the passageway wall.

The first attachment mechanism may be a mechanical fixing.

A second attachment mechanism adds strength to the engagement between the apparatus and existing pipe resulting in a more secure and potentially better and/or tighter seal between the two components.

The second attachment mechanism may, in use, pierce the existing pipe. In one embodiment, applying a mechanical fixing through the branch engagement portion transition section ensures that should the mechanical fixing pierce the wall of the existing pipe, any leakage between the second attachment mechanism and the existing pipe, will be through the branch engagement portion transition section and into, in use, the branch pipe. This ensures any leakage is retained within the plumbing system and not the external environment.

### Brief Description of the Drawings

An embodiment of the present invention will now be described with reference to the accompanying drawings in which:
Figure 1 is a side view of an apparatus for attaching a branch pipe to an existing pipe according to an embodiment of the present invention;
Figure 2 is an end view of the apparatus of Figure 1;
Figure 3 is a front view of the apparatus of Figure 1;
Figure 4 is a first- perspective view of the apparatus of Figure 1 shown with an existing pipe;
Figure 5 is a second perspective view of the apparatus of Figure 1 shown with the existing pipe;
Figure 6 is a front view of the apparatus of Figure 1 shown attached to the existing pipe; and
Figure 7 is an end view of the apparatus of Figure 1 shown attached to the existing pipe and a branch pipe.

### Detailed Description of the Drawings

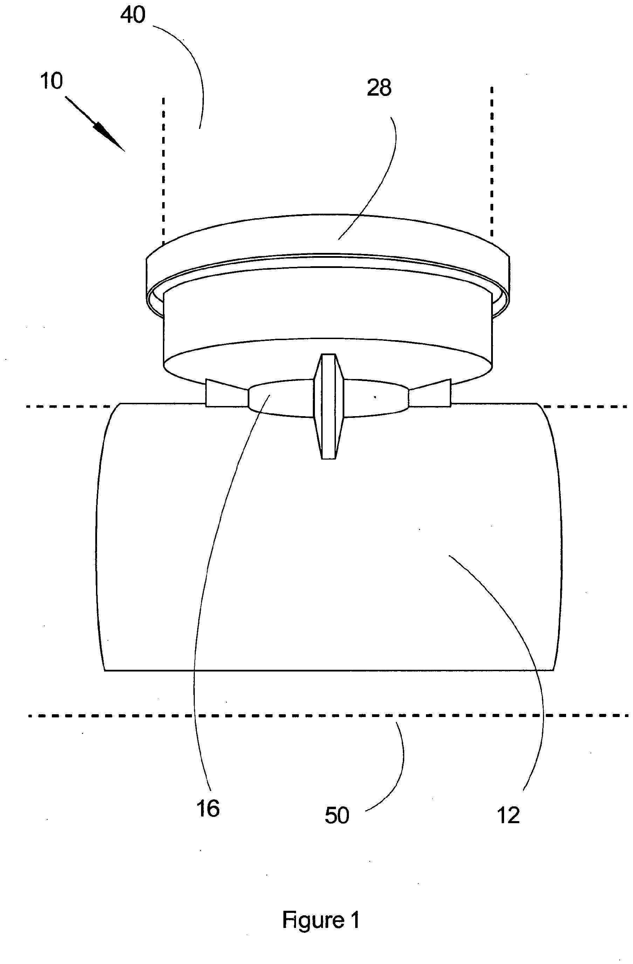

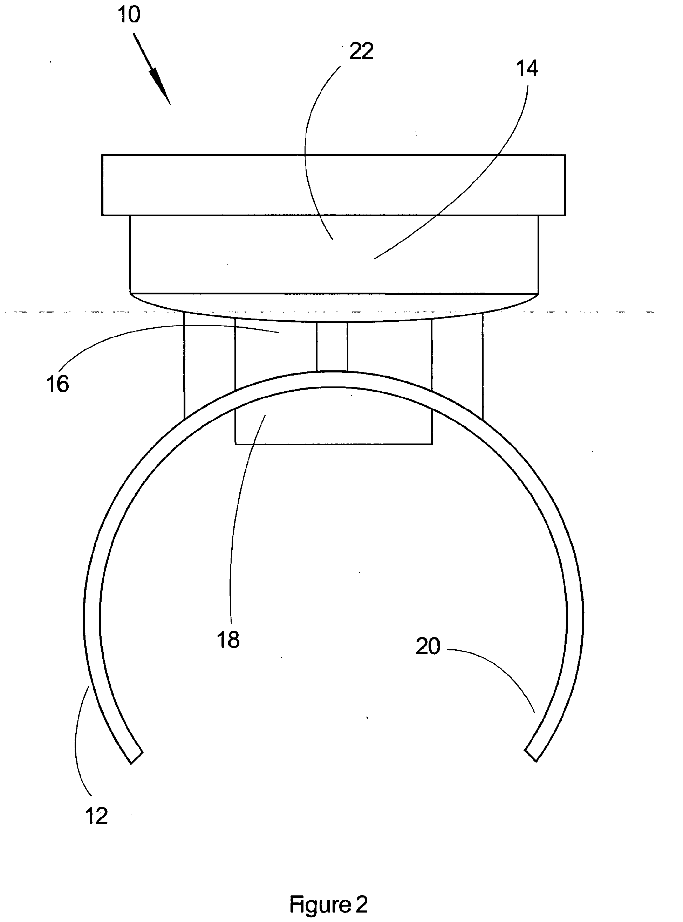

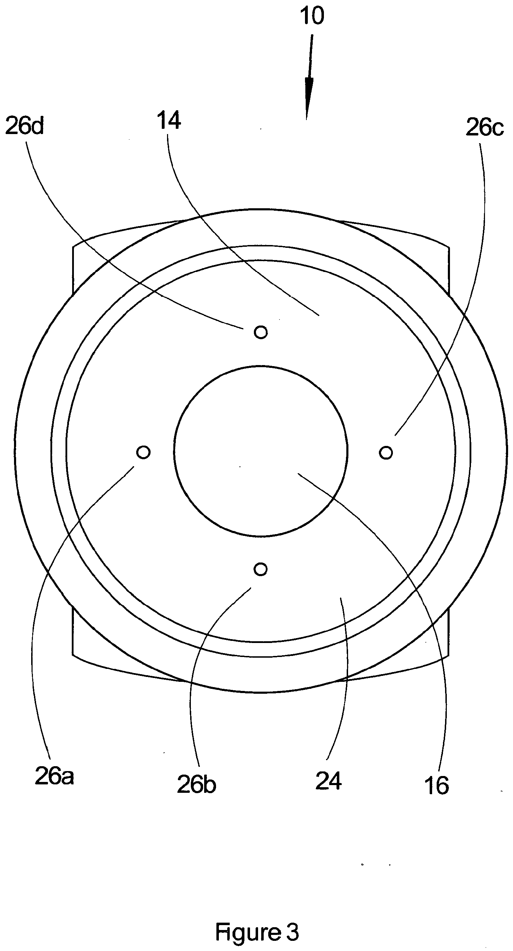

Reference is firstly made to Figures 1 and 2 and 3, side, top and front views of an apparatus, generally indicated by reference numeral 10 for attaching a branch pipe 40 (shown in broken outline) to an existing pipe 50 (shown in broken outline). The apparatus 10 comprises a pipe engagement portion 12 adapted to engage the surface of the existing pipe 50 (shown in later Figures). The apparatus 10 further comprises a branch engagement portion 14 adapted to receive the end of the branch pipe 40 to be connected to the existing pipe 50. The pipe engagement portion 12 and the branch engagement portion 14 are in fluid communication by means of a passageway 16 defined by a passageway wall 18. It will be noted that the passageway wall 18 extends through the pipe engagement portion 12. The purpose of this will be discussed in due course

The pipe engagement portion 12 comprises a resilient polymer which is adapted to snap fit around the existing pipe 50 providing a first attachment mechanism 20 for attaching the apparatus 10 to an existing pipe. As can be seen, the first attachment mechanism 20, in the form of the pipe engagement portion 12, extends from the passageway 16.

A second attachment mechanism 26 is provided in a transition section 24 of the branch engagement portion 14. The transition section 24 provides a transition from the branch engagement portion wall 22 to the passageway wall 18. The passageway 16 has a smaller diameter than the branch engagement portion 14 and the provision of a transition section 24 to link the two permits a second attachment means 22 to be situated within the branch engagement portion 14. The second attachment means are four holes 26a-d which pass through fins 28 extending perpendicularly from, and are integral with, the passageway wall 18. The four holes 26a-d are adapted to receive screws which can be screwed through the apparatus 10 into the surface of the existing pipe 50.

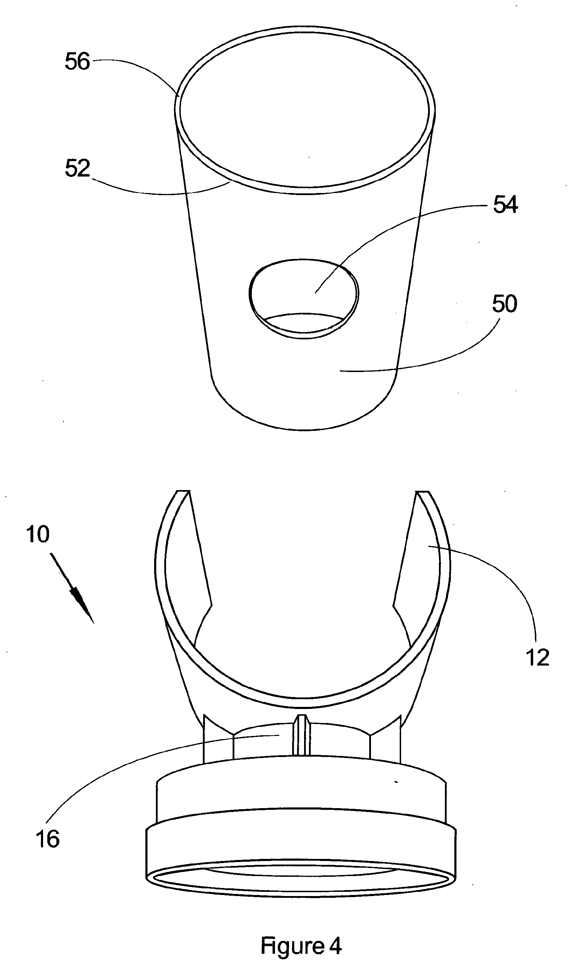

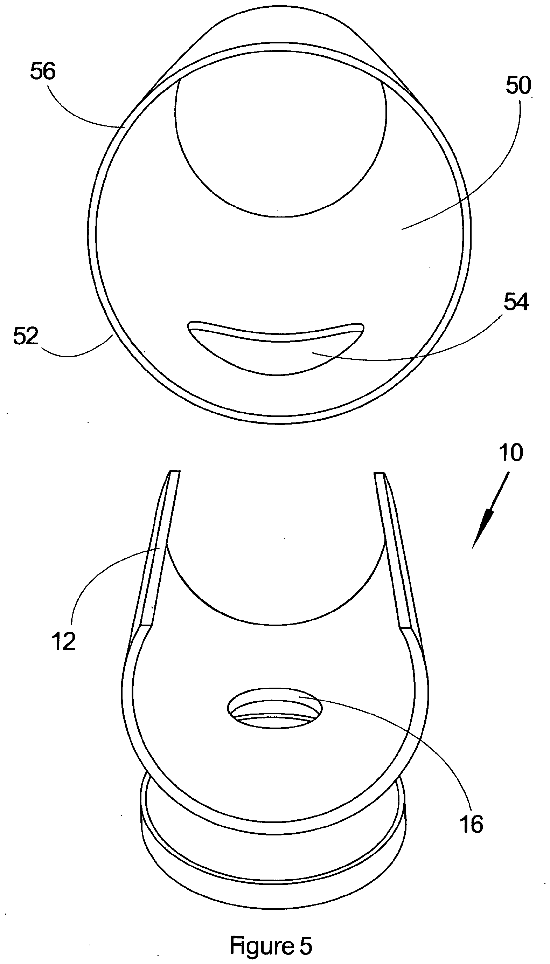

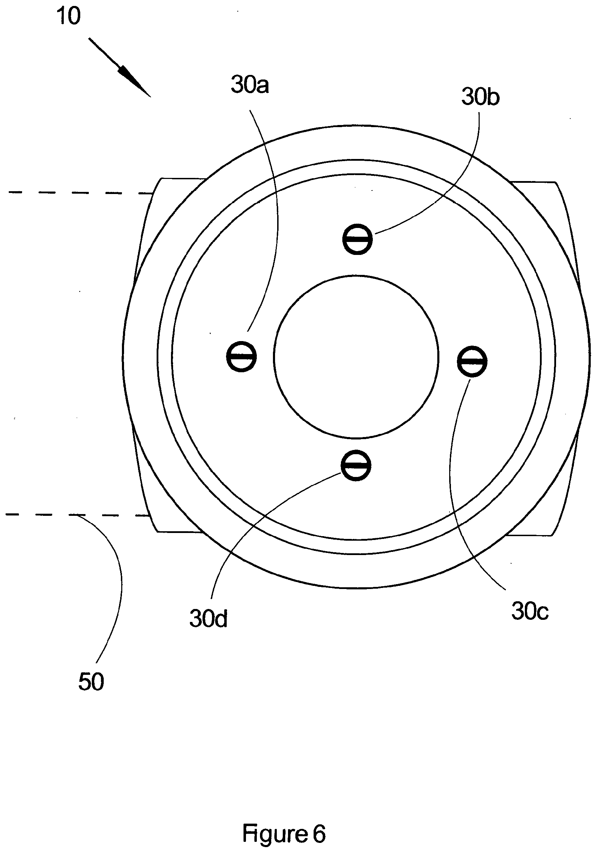

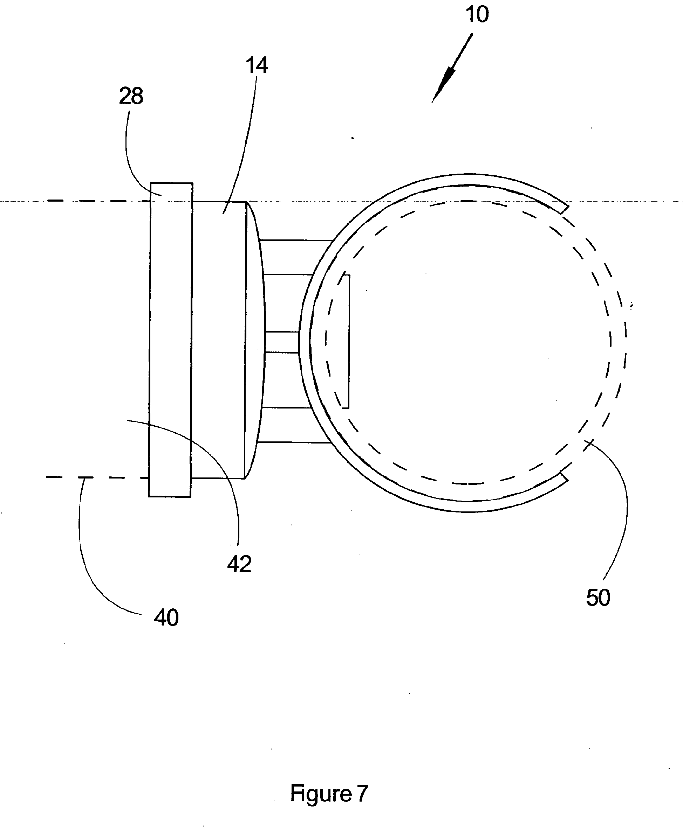

The operation of the apparatus 10 will now be described with reference to Figures 4, 5, 6 and 7. Figure 4 and 5 are perspective views of the apparatus 10 and the section of existing pipe 50. Figure 6 is a front view of the apparatus 10 attached to the existing pipe 50 and Figure 7 is a top view of the apparatus 10 attached to the existing pipe 50 and the branch pipe 40.

Referring firstly to Figure 4 and Figure 5, the existing pipe 50 has a hole 54 drilled through the pipe surface 52 and the wall 56 of the pipe 50. It will be seen most clearly from Figure 5 that the radius of the pipe engagement portion 12 is smaller than the radius of the pipe 50. As the pipe engagement portion 12 is a resilient material, it can be pushed onto the pipe 50 such that the passageway wall 18 extends into the hole 54 drilled in the existing pipe wall 56. Prior to pushing the apparatus 10 on to the pipe 50, an adhesive is spread over the pipe engagement portion surface to adhere the apparatus 10 to the pipe 50. As the pipe engagement portion 12 has a smaller radius than the pipe 50, the pipe engagement portion 12 snaps over the existing pipe 50 and forms a seal with the existing pipe 50 around the passageway 16.

Referring to Figure 6, the second attachment mechanism is then utilised by screwing for screws 30a-d into the existing pipe 50, thereby strengthening the engagement between the apparatus 10 and the existing pipe 50.

Referring finally to Figure 7, the branch pipe 40 is then inserted into the branch engagement portion 14, the branch seal 28 sealing against the branch pipe surface 42.

Various modifications and improvements may be made to the above described embodiment without departing from the scope of the invention. For example, as the seal between the pipe engagement portion and the existing pipe can be made using an adhesive, in some embodiments the pipe engaging portion may not extend so far around the existing pipe and the snap fit function may not be provided. This permits the apparatus 10 to be fitted to pipe which is less external surface exposed due to its location in a recess or having been buried for example.

## Claims

1. An apparatus (10) for attaching a branch pipe (40) to an existing pipe (50), the apparatus comprising:
a pipe engagement portion (12) adapted to engage the surface of an existing pipe;
a branch engagement portion (14) adapted to receive an end of a branch pipe to be connected to the existing pipe, the branch engagement portion defining a branch engagement portion wall (22);
a passageway (16) providing fluid communication between the pipe engagement portion and the branch engagement portion (14), the passageway (16) being defined by a passageway wall (18) and the passageway (16) being of a smaller diameter than the branch engagement portion (14);
wherein the branch engagement portion defines a transition section (24) providing a continuous surface from the branch engagement portion wall to the passageway wall (18);
a first attachment mechanism (20) for attaching the apparatus (10) to an existing pipe;
wherein, the first attachment mechanism (20) is provided adjacent the passageway (16); and
a second attachment mechanism (26) for attaching the apparatus to said existing pipe (50);
**characterised in that** the second attachment mechanism (26) is applied through the branch engagement portion transition section (24).

2. The apparatus of claim 1, wherein the passageway wall (18) has a perimeter and the pipe engagement portion (12) extends around the circumference of perimeter of the passageway wall (18).

3. The apparatus of any preceding claim, wherein the passageway wall (18) extends through the pipe engagement portion (12).

4. The apparatus of any preceding claim, wherein the pipe engagement portion (12) defines a curved engagement surface for engaging the surface of an existing pipe (50), the curve of the engagement surface having the same radius as the radius of the external surface of the existing pipe (50), in use.

5. The apparatus of claim 4, wherein the pipe engagement portion (12) is resilient and the pipe engagement portion (12) defines a curved engagement surface for engaging the surface of the existing pipe (50), the engagement surface having a radius less than the radius of the external surface of the existing pipe (50), in use.

6. The apparatus of either of claims 4 or 5, wherein the pipe engagement portion (12) engaging surface is adapted to seal against the existing pipe surface (50), the pipe engagement portion (12) including a gasket, seal or similar mechanism or a sealing material to provide a seal (28) between the apparatus (10) on the existing pipe (50) surface.

7. The apparatus of any preceding claim, wherein the pipe engagement portion (12) engaging surface is adapted to be adhered to the existing pipe surface (50), the adherence being sufficient to provide a seal between the two components.

8. The apparatus of claim 7, wherein the apparatus (10) is provided with an adhering layer applied to the pipe engagement portion (12) engagement surface.

9. The apparatus of any preceding claim when dependent on claim 3, wherein the extended passageway wall (18) further comprises a seal for sealing against a hole cut in the existing pipe to receive the passageway wall (18) and the seal is adapted to seal against an internal surface of the existing pipe (50).

10. The apparatus of claim 9, wherein the apparatus (10) is arranged such that the seal can be sealed against the internal surface of the existing pipe (50) by application of an energising force applied from the external side of the existing pipe (50), the energising force being applied through the passageway (16).

11. The apparatus of any preceding claim, wherein, in use, a branch pipe (40) is received within the branch engagement portion wall (22).

12. The apparatus of any of claims 1 to 10, wherein, in use, the branch engagement portion wall is received within a branch pipe (42).

13. The apparatus of any preceding claim, wherein the second attachment mechanism (26), in use, pierces the existing pipe (50).

14. The apparatus of any preceding claim, wherein the first attachment mechanism (20) and the pipe engagement portion (12) are the same.

## Patentansprüche

1. Vorrichtung (10) zum Befestigen eines Abzweigrohrs (40) an einem bestehenden Rohr (50), wobei die Vorrichtung umfasst:
einen Rohreingriffsabschnitt (12), der angepasst ist, um mit der Oberfläche eines existierenden Rohres in Eingriff zu kommen;
einen Zweigeingriffsabschnitt (14), der angepasst ist, um ein Ende eines Abzweigrohrs, das mit dem existierenden Rohr zu verbinden ist, aufzunehmen, wobei der Zweigeingriffsabschnitt eine Zweigeingriffsabschnittswand (22) definiert;
einen Durchgang (16), der eine Fluidverbindung zwischen dem Rohreingriffsabschnitt und dem Zweigeingriffsabschnitt (14) bereitstellt, wobei der Durchgang (16) von einer Durchgangswand (18) definiert ist und der Durchgang (16) einen kleineren Durchmesser als der Zweigeingriffsabschnitt (14) aufweist;
wobei der Zweigeingriffsabschnitt einen Übergangsbereich (24) definiert, der eine kontinuierliche Oberfläche von der Zweigeingriffsabschnittswand zu der Durchgangswand (18) bereitstellt;
einen ersten Befestigungsmechanismus (20) zum Befestigen der Vorrichtung (10) an einem bestehenden Rohr;
wobei der erste Befestigungsmechanismus (20) benachbart zu dem Durchgang (16) vorgesehen ist; und
einen zweiten Befestigungsmechanismus (26) zum Befestigen der Vorrichtung an dem bestehenden Rohr (50);
**dadurch gekennzeichnet, dass** der zweite Befestigungsmechanismus (26) durch den Übergangsbereich (24) des Zweigeingriffsabschnitts aufgebracht ist.

2. Vorrichtung nach Anspruch 1, wobei die Durchgangswand (18) einen Perimeter aufweist und der Rohreingriffsabschnitt (12) sich um den Umfang des Perimeters der Durchgangswand (18) erstreckt.

3. Vorrichtung nach einem vorstehenden Anspruch, wobei sich die Durchgangswand (18) durch den Rohreingriffsabschnitt (12) erstreckt.

4. Vorrichtung nach einem vorstehenden Anspruch, wobei der Rohreingriffsabschnitt (12) eine gekrümmte Eingriffsoberfläche zum in Eingriff bringen der Oberfläche eines bestehenden Rohrs (50) definiert, wobei, im Gebrauch, die Krümmung der Eingriffsoberfläche den gleichen Radius wie der Radius der äußeren Oberfläche des bestehenden Rohrs (50) aufweist.

5. Vorrichtung nach Anspruch 4, wobei der Rohreingriffsabschnitt (12) elastisch ist und der Rohreingriffsabschnitt (12) eine gekrümmte Eingriffsoberfläche zum in Eingriff bringen der Oberfläche eines bestehenden Rohrs (50) definiert, wobei, im Gebrauch, die Eingriffsoberfläche einen Radius aufweist, der kleiner als der Radius der äußeren Oberfläche des bestehenden Rohrs (50) ist.

6. Vorrichtung nach Anspruch 4 oder 5, wobei die Eingriffsoberfläche des Rohreingriffsabschnitts (12) angepasst ist, um gegen die Oberfläche des bestehenden Rohrs (50) abzudichten, wobei der Rohreingriffsabschnitt (12) eine Dichtung, eine Abdichtung oder einen ähnlichen Mechanismus oder ein Dichtungsmaterial aufweist, um eine Abdichtung (28) zwischen der Vorrichtung (10) an der Oberfläche des bestehenden Rohrs (50) bereitzustellen.

7. Vorrichtung nach einem vorstehenden Anspruch, wobei die Eingriffsoberfläche des Rohreingriffsabschnitts (12) angepasst ist, um an der Oberfläche des bestehenden Rohrs (50) zu haften, wobei die Haftung ausreichend ist, um eine Abdichtung zwischen den zwei Komponenten bereitzustellen.

8. Vorrichtung nach Anspruch 7, wobei die Vorrichtung (10) mit einer haftenden Schicht versehen ist, die auf der Eingriffsoberfläche des Rohreingriffsabschnitts (12) aufgebracht ist.

9. Vorrichtung nach einem vorstehenden Anspruch, wenn abhängig von Anspruch 3, wobei die verlängerte Durchgangswand (18) weiter eine Abdichtung zum Abdichten gegen ein Loch umfasst, das in das bestehende Rohr geschnitten ist, um die Durchgangswand (18) aufzunehmen, und wobei die Abdichtung angepasst ist, um gegen eine innere Oberfläche des bestehenden Rohrs (50) abzudichten.

10. Vorrichtung nach Anspruch 9, wobei die Vorrichtung (10) angeordnet ist, sodass die Abdichtung gegen die innere Oberfläche des bestehenden Rohrs (50) durch Aufbringen einer Erregungskraft, die von der äußeren Seite des bestehenden Rohrs (50) aufgebracht wird, abdichten kann, wobei die Erregungskraft durch den Durchgang (16) aufgebracht wird.

11. Vorrichtung nach einem vorstehenden Anspruch, wobei, im Gebrauch, ein Abzweigrohr (40) innerhalb der Zweigeingriffsabschnittswand (22) aufgenommen ist.

12. Vorrichtung nach einem der Ansprüche 1 bis 10, wobei, im Gebrauch, die Zweigeingriffsabschnittswand innerhalb eines Abzweigrohrs (42) aufgenommen ist.

13. Vorrichtung nach einem vorstehenden Anspruch, wobei der zweite Befestigungsmechanismus (26) im Gebrauch das bestehende Rohr (50) durchstößt.

14. Vorrichtung nach einem vorstehenden Anspruch, wobei der erste Befestigungsmechanismus (20) und der Rohreingriffsabschnitt (12) die gleichen sind.

## Revendications

1. Appareil (10) pour attacher un tuyau de branchement (40) à un tuyau existant (50), l'appareil comprenant :
une partie d'engagement de tuyau (12) adaptée à s'engager avec la surface d'un tuyau existant ;
une partie d'engagement de branchement (14) adaptée à recevoir une extrémité d'un tuyau de branchement à raccorder au tuyau existant, la partie d'engagement de branchement définissant une paroi de partie d'engagement de branchement (22) ;
un passage (16) assurant une communication fluidique entre la partie d'engagement de tuyau et la partie d'engagement de branchement (14), le passage (16) étant défini par une paroi de passage (18) et le passage (16) étant d'un diamètre inférieur à la partie d'engagement de branchement (14) ;
dans lequel la partie d'engagement de branchement définit une section de transition (24) fournissant une surface continue à partir de la paroi de la partie d'engagement de branchement jusqu'à la paroi de passage (18) ;
un premier mécanisme de fixation (20) pour fixer l'appareil (10) à un tuyau existant ;
dans lequel, le premier mécanisme de fixation (20) est prévu adjacent au passage (16) ; et
un second mécanisme de fixation (26) pour fixer l'appareil audit tuyau existant (50) ;
**caractérisé en ce que** le second mécanisme de fixation (26) est appliqué à travers la section de transition de partie d'engagement de branchement (24).

2. Appareil selon la revendication 1, dans lequel la paroi de passage (18) présente un périmètre et la partie d'engagement de tuyau (12) s'étend autour de la circonférence du périmètre de la paroi de passage (18).

3. Appareil selon l'une quelconque des revendications précédentes, dans lequel la paroi de passage (18) s'étend à travers la partie d'engagement de tuyau (12).

4. Appareil selon l'une quelconque des revendications précédentes, dans lequel la partie d'engagement de tuyau (12) définit une surface d'engagement incurvée pour s'engager avec la surface d'un tuyau existant (50), la courbe de la surface d'engagement ayant le même rayon que le rayon de la surface externe du tuyau existant (50), en cours d'utilisation.

5. Appareil selon la revendication 4, dans lequel la partie d'engagement de tuyau (12) est élastique et la partie d'engagement de tuyau (12) définit une surface d'engagement incurvée pour s'engager avec la surface du tuyau existant (50), la surface d'engagement ayant un rayon inférieur au rayon de la surface externe du tuyau existant (50), en cours d'utilisation.

6. Appareil selon l'une des revendications 4 ou 5, dans lequel la surface d'engagement de la partie d'engagement de tuyau (12) est adaptée à assurer l'étanchéité contre la surface de tuyau existant (50), la partie d'engagement de tuyau (12) comprenant une garniture, un joint ou un mécanisme similaire ou un matériau d'étanchéité pour fournir une étanchéité (28) entre l'appareil (10) et la surface de tuyau existant (50).

7. Appareil selon l'une quelconque des revendications précédentes, dans lequel la surface d'engagement de la partie d'engagement de tuyau (12) est adaptée à adhérer à la surface de tuyau existant (50), l'adhérence étant suffisante pour assurer une étanchéité entre les deux composants.

8. Appareil selon la revendication 7, dans lequel l'appareil (10) est pourvu d'une couche adhérente appliquée à la surface d'engagement de la partie d'engagement de tuyau (12).

9. Appareil selon l'une quelconque des revendications précédentes en dépendance avec la revendication 3, dans lequel la paroi de passage (18) prolongée comprend en outre un joint pour réaliser l'étanchéité contre un trou pratiqué dans le tuyau existant pour recevoir la paroi de passage (18) et le joint est adapté à réaliser une étanchéité contre une surface interne du tuyau existant (50).

10. Appareil selon la revendication 9, dans lequel l'appareil (10) est agencé de telle sorte que le joint peut être scellé contre la surface interne du tuyau existant (50) par l'application d'une force d'activation appliquée du côté externe du tuyau existant (50), la force d'activation étant appliquée à travers le passage (16).

11. Appareil selon l'une quelconque des revendications précédentes, dans lequel, lors de l'utilisation, un tuyau de branchement (40) est reçu à l'intérieur de la paroi (22) de la partie d'engagement de branchement.

12. Appareil selon l'une quelconque des revendications 1 à 10, dans lequel, lors de l'utilisation, la paroi de partie d'engagement de branchement est reçue à l'intérieur d'un tuyau de branchement (42).

13. Appareil selon l'une quelconque des revendications précédentes, dans lequel le second mécanisme de fixation (26), lors de l'utilisation, perce le tuyau existant (50).

14. Appareil selon l'une quelconque des revendications précédentes, dans lequel le premier mécanisme de fixation (20) et la partie d'engagement de tuyau (12) sont identiques.
